Europäisches Patentamt

(19) European Patent Office

Office européen des brevets

(11) Publication number: **0 234 062
B1**

(12) **EUROPEAN PATENT SPECIFICATION**

(45) Date of publication of the patent specification:
09.05.90

(51) Int. Cl.⁵: **F16L 23/02**

(21) Application number: **86202334.8**

(22) Date of filing: **18.12.86**

(54) **An apparatus for the butt-joining of channels carrying a gaseous medium, a formed section and a connection hook therefor.**

(30) Priority: **18.12.85 NL 8503491**
**04.04.86 NL 8600864**

(43) Date of publication of application:
**02.09.87 Bulletin 87/36**

(45) Publication of the grant of the patent:
**09.05.90 Bulletin 90/19**

(84) Designated Contracting States:
**AT BE CH DE ES FR GB GR IT LI LU NL SE**

(56) References cited:
**DE-A- 2 221 312**
**DE-A- 2 630 554**
**DE-C- 3 214 693**
**US-A- 3 199 901**
**US-A- 4 218 079**

(73) Proprietor: **De Waal, Casparus Wilhelmus, Leembaan 21, NL-5753 CW Deurne(NL)**

(72) Inventor: **De Waal, Casparus Wilhelmus, Leembaan 21, NL-5753 CW Deurne(NL)**

(74) Representative: **Hoorweg, Petrus Nicolaas et al, OCTROOIBUREAU ARNOLD & SIEDSMA Sweelinckplein 1, NL-2517 GK The Hague(NL)**

ACTORUM AG

## Description

The invention relates to an apparatus for the butt-joining of channels carrying a gaseous medium, said channels having a rectangular or square cross-section, wherein a formed section is fastened along each wall of the free end portion of each channel, said formed section presenting a wall standing perpendicular to the channel wall and also a recess situated at both ends for the insertion of a respective hook-shaped member, and at least the two facing hook-shaped members of the channels to be connected are joined together, wherein the formed section has a substantially L-shaped cross-section.

Apparatus of the type described in the heading and according to DE-A 2 221 312 serves for the gas-tight connection of medium carrying channels, such that the requirement is that the connection sections and members are so assembled that leakages do not occur around the joint. It is usual to use hollow formed sections, between the end faces of which there is placed a sealing means in the form of an adhesive strip. The hollow sections present flanges which are locatable on the outside and the inside, respectively, of the channel wall. The disadvantage of formed sections of this kind is the difficult sealing as a consequence of that flat end face of the section supporting the sealing mastic, the problem being particularly prominent at the corners of the cross-section. This collar can easily be damaged before and during assembly.

It is an object of the invention to ensure that the strip seal is permanently effective at the corners of the cross-section of the channel and to that end provides an apparatus which is distinguished in that the hook-shaped portion has an extension at the edge of the inner corner which is set back with respect to the main body of said member in a direction away from the free end of the channel to form a recess which accommodates sealing means such that the correct positioning of the sealing means, for example, mastic, can be accurately verified in advance and owing to the recessed location of the sealing means, it is well protected against blows.

According to a further object of the invention the arm of said section forming the end wall has a portion directly adjacent to the channel which is stepped back in a direction away from the free end of the channel for the whole length of the formed section, such that a recessed portion is formed for the accommodation of a sealing means.

In a first embodiment the formed section is simple, so that the recessed portion forms a groove together with the channel wall for the accommodation of a strip seal. In this embodiment the other arm of the L-shaped section comes to lie on the outside of the channel wall. Owing to the fact that there is no flange of the connecting formed sections present on the inside of the channel wall, the channel wall can now itself function as a sealing means, together with the strip seal, which owing to the proposed groove is to the desired extent pre-loaded so that an adequate seal is formed around the entire circumference of the channel wall.

With the proposed L-shaped cross-section of the section, the hook-shaped member can be fastened in a variety of ways. In the preferred embodiment, however, the means for accommodating the hook-shaped member are formed by a flanged top edge portion of the one arm and an outward protruding rib of the wall of the groove. There is thus formed an open channel into which one arm of the hook-shaped member can be placed.

In accordance with a further development, the flanged edge portion can be further extended, its free edge being beaded over. Thereby the flanged edge portion can serve for the mounting of a known in its own right, U-shaped clasp strip.

In practice it has become apparent that the strip seal is by preference a two-chambered hollow moulding. In this way the strip seal can be easily preassembled gripped in the groove, which considerably reduces the work of assembly at the final destination. Wastage and the like are thereby kept to a minimum.

In another embodiment the flanged edge portion is extended by a substantially L-shaped supporting flange, a pleat pointing towards the supporting flange being situated between the recessed portion and the end face.

In this embodiment the connecting section has a double construction and the channel wall comes to lie between the two L-shaped parts of the section. Here, too, the recessed portion provides either for the accommodation of a sealing means, such as mastic, or for the mounting of the arm of a U-shaped fastening strip to be placed in the pleat for the securing of an insulating layer applied to the inside of the channel wall. Since this section is also situated in a recess, there remains sufficient space over for the mounting of the above-said sealing means.

The invention will be further explained by reference to the detailed description, herebelow, of an embodiment.

In the drawing:

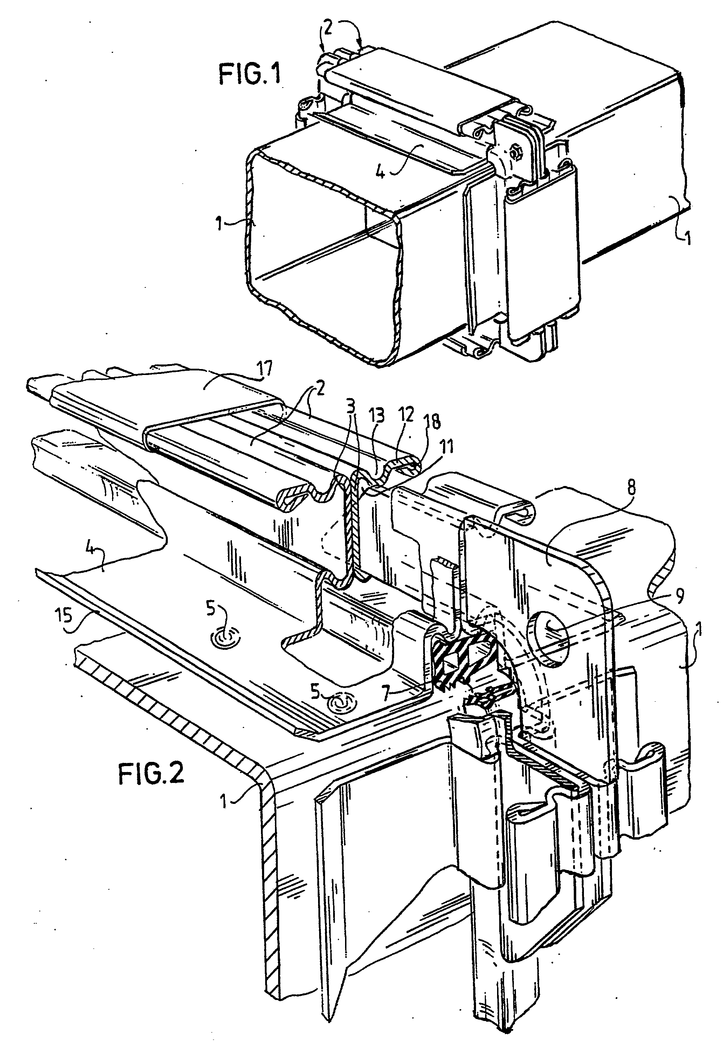

Figure 1 shows a perspective view of a part of a channel for conducting a gaseous medium having the connecting section according to the invention,

Figure 2 shows a perspective view corresponding to figure 1 of a detail of the joint on an enlarged scale,

Figures 3a and 3b each show a perspective view of an embodiment of the connecting formed section according to the invention,

Figure 4 shows a perspective view of the hook-shaped member according to the invention, and

Figure 5 shows a perspective view corresponding to figure 2 of a second embodiment of the joint on an enlarged scale.

In each of the figures, the numeral 1 indicates a channel which serves for the conveyance of a gaseous medium, for example air for ventilation or warm air for central heating.

The channel pieces 1 have to be butt-joined so that a smooth continuous weld is brought about. This weld is formed by arranging on the outside of channels 1 substantially L-shaped sections 2, of which one arm 3 stands perpendicular to the channel wall and the other arm 4 is permanently secured in a suitable manner, for example by means of spot weld 5, on the outer wall of channel section 1.

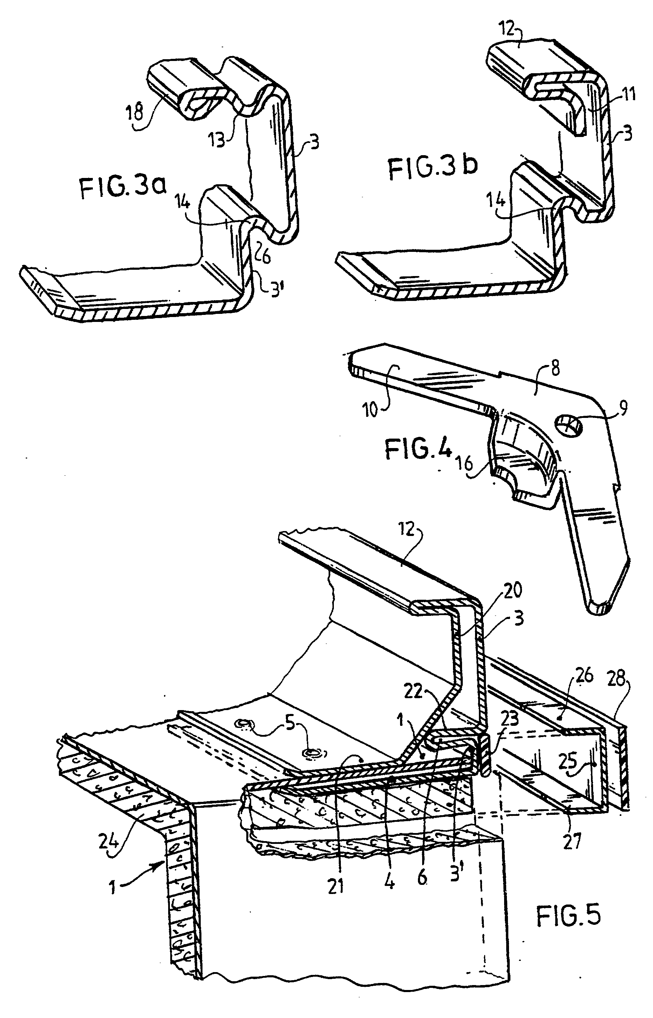

According to the invention (see also figure 3), end face 3, which is to be laid against the end face 3 of the channel section opposite, is stepped back along the whole length of the formed section (see part 3′), thus forming a continuous groove 6, the other wall of which being formed by the edge portion of channel section 1. In the groove thus formed strip seal 7 is to be located, which seal is made in the preferred embodiment as a two-chambered hollow strip. The web between the two chambers in strip 7 lies in the joint plane of channels 1.

In the shown embodiment, the parts on either side of the web are of different shapes. The one part presents ribs which are gripped in the groove, thus facilitating pre-assembly. The other part tapers off.

For the connection together of either channel sections 1 or of formed sections 2, a hook-shaped member 8 (see also figure 4) is inserted in each outer end, which hook shaped member is provided with a through hole 9, which is to be brought into alignment with a through hole 9 of an adjacent hook-shaped member 9. A bolt or the like can be passed through these holes and fastened. In this manner end faces 3 of respective formed sections 2 come to lie against each other, and thus also channel sections 1.

For the rigid accommodation of hook-shaped member 8, arm 10 thereof is placed in an open channel 11 of formed section 2, which open channel is formed by end face 3 and its flanged upper edge portion 12. This has a downward flexure at 13, while the wall of groove 6 has an upward flexure at 14 (see figure 3a). As an alternative, the flanged edge portion 12 according figure 3b may be turned over again with its free edge portion pointing downward so that open channel 12 is formed by said free edge portion and upward flexure of the groove wall 14.

The other arm 4 of formed section 2, to be fixed to channel wall 1, is to some extent flanged upwards along its free edge 15, which has a stiffening function and also a piloting function during mounting of the formed section assembly, already formed into a framework with hooked members 8, for the final permanent connection of flange 4 to the channel wall.

In the shown embodiment, hook-shaped member 8 is additionally made with an extended portion 16 on the inside, such that this aligns with groove 6 of formed section 2. In this way a continuous groove can be formed, and a continuous strip seal 7 can be mounted, also in the corner region of channel wall 1. Through correct dimensioning of the groove and of matching strip seal 7, strip seal 7 is pre-loaded in assembly such that a leak-free seal is realized around the entire circumference of channels 1.

Finally, it should be remarked that flanged edge strip 12 can be lengthened past extended portion 13, the free edge being beaded over at 18, such that a U-shaped clasp strip 17, known in its own right, can be pushed onto formed sections 2. A clasp strip 17 of the kind can equally be mounted around folded flange 12 of formed section 2, as in figure 3b.

In figure 5 the second embodiment of the invention is shown. The same numerals have been adopted for the same components.

This embodiment is in particular characterized by the continuation of flanged top edge portion 12 as a supporting flange 20. In this manner a doubled version of the formed section is brought about, in which, as is the normal practice, channel wall 1 is accommodated between the other arm 4 of the main L-shaped section and end flange 21, lying parallel to said other arm 4, of supporting flange 20. The end edge of the channel wall abuts against the main formed section or, in other words, against the recessed and stepped back portion 3′ thereof.

In this embodiment, a pleat 22, pointing towards supporting flange 20, is located between stepped back portion 3′ and abutment face 3.

After the securing of the connecting section to the channel wall by means of known spot welds 5, already mentioned above, the stepped back wall portion 3′ will form a grooved region for the accommodation of a strip seal 22, as will be apparent from figure 5.

If, however, channel wall 1 is provided with an insulating layer 24, said insulating layer can be secured at the ends of channel 1 by means of a U-shaped fastening strip 25, whereof the one arm 26 is thrust into pleat 22. The other arm 27 of U-shaped connecting strip 25 hooks around the underside or the inside of insulating layer 24 and thus secures it. Strip seal 23 can in this case be omitted. In place thereof, a strip seal 28 can be arranged on the external or open side of fastening strip 25.

In the corners, a hook-shaped member according to figure 4 may be used, whereof the arms 10 enter the space between supporting flange 20 and front wall 3. This hook shaped member too has an extended portion 16 such that this aligns with stepped back portion 3′ of the formed section. Strip or mastic seal 23 or 28 can thus continue past the corners of the respective channel walls 1 and adequately seal the gap between them. The mastic is well protected in this stepped back portion also. The mastic is pre-applied during manufacturing, so said mastic must not be able to break away or to become chafed during transportation and final assembly. This is prevented, owing to its recessed situation.

## Claims

1. An apparatus for the butt-joining of channels (1) carrying a gaseous medium, said channels having a rectangular or square cross-section, wherein a formed section (2) is fastened along each wall of the free end portion of each channel, said formed section presenting a wall (3) standing perpendicular to the channel wall and also a recess situated at both ends for the insertion of a respective hook-shaped member (8), and at least the two facing hook-shaped members of the channels to be connected are joined together, wherein the formed section has a substantially L-shaped cross-section, characterized in that the hook-shaped portion has an extension (16) at the edge of the inner corner which is set back with respect to the main body of said member (8) in a direction away from the free end of the channel to form a recess which accommodates sealing means.

2. An apparatus as claimed in claim 1, characterized in that the arm of said section forming the end wall has a portion directly adjacent to the channel which is stepped back in a direction away from the free end of the channel for the whole length of the formed section, such that a recessed portion is formed for the accommodation of a sealing means (7, 23).

3. An apparatus as claimed in claims 1 and 2, characterized in that the formed section (2) is of a simple execution, the recessed portion forming, together with the channel wall (1), a groove (6) for the accommodation of a strip seal (7).

4. An apparatus as claimed in claims 1–3, characterized in that the means for the accommodation of the hook-shaped member (8) are formed by a flanged top edge part (12) of the said arm and an outward protruding rib of the groove wall.

5. An apparatus as claimed in claims 1–4, characterized in that the flanged edge part (12) is extended, the free edge (18) thereof being beaded over.

6. An apparatus as claimed in claims 1–5, characterized in that the strip seal is a hollow strip (7) with a double chamber.

7. An apparatus as claimed in claim 6, characterized in that the wall of the one chamber presents gripping ribs or the like, while that of the other chamber tapers towards the outside.

8. An apparatus as claimed in claim 1, characterized in that the flanged edge portion is extended by a substantially L-shaped supporting flange (20), a pleat (22) pointing towards the supporting flange being situated between the stepped-back portion and the end face (3).

9. An apparatus as claimed in claim 8, characterized in that the pleat widens (22) towards the rear in order to accommodate one arm (26) of a U-shaped fastening strip (25) for an insulating layer (24) arranged on the inside of the channel 1.

## Patentansprüche

1. Vorrichtung zum Verbinden stumpf aufeinanderstoßender, gasförmiges Medium führender Kanäle (1), wobei die Kanäle (1) einen rechteckigen oder quadratischen Querschnitt aufweisen, wobei entlang jeder Wandung des freien Endbereichs eines jeden Kanals (1) ein geformter Bereich (2) befestigt ist, wobei der geformte Bereich (2) eine senkrecht zur Wandung des Kanals (1) stehende Wandung (3) und eine an beiden Enden angeordnete Ausnehmung zur Aufnahme eines jeweiligen hakenförmigen Teils (8) aufweist, wobei zumindest die beiden einander entgegengerichteten hakenförmigen Teile (8) der zu verbindenden Kanäle (1) miteinander verbunden sind und wobei der geformte Bereich (2) einen im wesentlichen L-förmigen Querschnitt aufweist, dadurch gekennzeichnet, daß das hakenförmige Teil (8) am Rand der inneren Ecke einen erweiterten Bereich (16) aufweist, daß dieser Bereich (16) in eine dem freien Ende des Kanals (1) entgegengesetzte Richtung vom Hauptkörper des hakenförmigen Teils (8) zurückgesetzt ist und daß dadurch ein Versatz zur Aufnahme eines Dichtungsmittels gebildet ist.

2. Vorrichtung nach Anspruch 1, dadurch gekennzeichnet, daß der die Endwand bildende Arm des geformten Teils einen direkt an den Kanal angrenzenden Bereich aufweist, daß dieser Bereich über die gesamte Länge des geformten Bereichs in eine dem freien Ende des Kanals entgegengerichtete Richtung derart zurückgesetzt ist, daß zur Aufnahme einer Dichtung (7, 23) ein Versatzbereich gebildet ist.

3. Vorrichtung nach Anspruch 1 oder 2, dadurch gekennzeichnet, daß der geformte Bereich einfach ausgeführt ist und dabei gemeinsam mit der Kanalwandung (1) eine Nut (6) zur Aufnahme eines Dichtungsbandes (7) bildet.

4. Vorrichtung nach einem der Ansprüche 1 bis 3, dadurch gekennzeichnet, daß die Mittel zur Aufnahme des hakenförmigen Teils (8) durch einen geflanschten oberen Randbereich (12) des Arms und durch eine nach außen hervorragende Rippe der Nutenwandung gebildet ist.

5. Vorrichtung nach einem der Ansprüche 1 bis 4, dadurch gekennzeichnet, daß der geflanschte obere Randbereich (12) erweitert ist, wobei dessen freier Rand (18) umgebördelt ist.

6. Vorrichtung nach einem der Ansprüche 1 bis 5, dadurch gekennzeichnet, daß das Dichtungsband als hohles Band (7) mit einer Doppelkammer ausgeführt ist.

7. Vorrichtung nach Anspruch 6, dadurch gekennzeichnet, daß die Wandung einer der Kammern Halterippen oder dgl. aufweist und daß die Wandung der anderen Kammer sich zur Außenseite hin verjüngt.

8. Vorrichtung nach Anspruch 1, dadurch gekennzeichnet, daß der geflanschte Randbereich durch einen im wesentlichen L-förmigen Stützflansch (20) und einen in Richtung des Stützflansches (20) gerichteten, zwischen dem zurückgesetzten Bereich und der Endfläche (3) angeordneten Falz (22) erweitert ist.

9. Vorrichtung nach Anspruch 8, dadurch gekennzeichnet, daß sich der Falz (22) zur Aufnahme eines Schenkels (26) eines U-förmigen Befestigungsbandes (25) zur Befestigung einer Isolierschicht (24) auf der Innenseite des Kanals (1) nach hinten aufweitet.

## Revendications

1. Dispositif pour assembler bout-à-bout des conduits (1) qui transportent un fluide gazeux et qui présentent une section rectangulaire ou carrée, dans lequel une section formée (2) est fixée le long de chaque paroi de la partie terminale libre de chaque conduit, cette section formée présentant une paroi (3) s'étendent perpendiculairement à la paroi du conduit, ainsi qu'un évidement situé aux deux extrémités pour l'insertion d'un élément respectif en forme de crochet (8), et au moins les deux éléments en forme de crochets en vis-à-vis des conduits à assembler étant réunis l'un à l'autre, la section formée présentant en coupe transversale sensiblement une forme en L, caractérisé en ce que la partie en forme de crochet possède un prolongement (16) sur le bord de l'angle intérieur qui est refoulé par rapport au corps principal de l'élément (8) en éloignement de l'extrémité libre du conduit, pour former un évidement qui reçoit un moyen d'étanchéité.

2. Dispositif selon la revendication 1, caractérisé en ce que le bras de la section précitée, formant la paroi terminale, possède une partie directement voisine du conduit qui est refoulée en éloignement de l'extrémité libre du conduit sur toute la longueur de la section formée, de sorte qu'une partie évidée est formée pour recevoir un moyen d'étanchéité (7, 23).

3. Dispositif selon les revendications 1 et 2, caractérisé en ce que la section formée (2) est d'une exécution simple, la partie évidée formant, conjointement avec la paroi du conduit (1), une rainure (6) pour recevoir un joint d'étanchéité en bande (7).

4. Dispositif selon les revendications 1 à 3, caractérisé en ce que les moyens pour recevoir l'élément en forme de crochet (8) sont formés par une partie de bord supérieur bridée (12) du bras précité, et par une nervure, en saillie vers l'extérieur, de la paroi de la rainure.

5. Dispositif selon les revendications 1 à 4, caractérisé en ce que la partie de bord bridée (12) est prolongée, son bord libre (18) étant recourbé en bourrelet.

6. Dispositif selon les revendications 1 à 5, caractérisé en ce que le joint d'étanchéité en bande est une bande creuse (7) avec une double chambre.

7. Dispositif selon la revendication 6, caractérisé en ce que la paroi d'une des chambres présente des nervures d'accrochage ou similaires, tandis que celle de l'autre chambre s'amincit vers l'extérieur.

8. Dispositif selon la revendication 1, caractérisé en ce que la partie de bord bridée est prolongée par une bride de support sensiblement en forme de L (20), un repli (22) tourné vers la bride de support étant situé entre la partie refoulée et la face terminale (3).

9. Dispositif selon la revendication 8, caractérisé en ce que le repli (22) s'élargit vers l'arrière afin de recevoir un bras (26) d'une bande de fixation en forme de U (25) pour une couche isolante (24) disposée sur le côté intérieur du conduit (1).

EP 0 234 062 B1

FIG.1

FIG.2

FIG.3a

FIG.3b

FIG.4

FIG.5